# FASCICULE DE BREVET EUROPEEN

(11) **EP 3 847 566 B1**
(45) Date de publication et mention de la délivrance du brevet: **13.05.2026**
(21) Numéro de dépôt: 19784117.4
(22) Date de dépôt: 03.09.2019
(51) Int. Cl.: G06F 21/44

(54) **PROCEDE DE SECURISATION DE L'UTILISATION D'UN APPAREIL FONCTIONNANT AVEC UN ACCESSOIRE OU UN CONSOMMABLE**
VERFAHREN ZUM SICHERN DER NUTZUNG EINES MIT EINEM ZUBEHÖR ODER EINEM VERBRAUCHSMATERIAL ARBEITENDEN GERÄTS
METHOD FOR SECURING THE USE OF AN APPARATUS OPERATING WITH AN ACCESSORY OR A CONSUMABLE

(30) Priorité: 06.09.2018 FR 1857992
(43) Date de publication de la demande: 14.07.2021
(73) Titulaire: Sealsq France, 13590 Meyreuil (FR)
(72) Inventeur: DEBELLEIX, Olivier, 83470 SAINT MAXIMIN LA SAINTE BAUME (FR); DUPAQUIS, Vincent, 13120 BIVER (FR); GUIDET, Tania, 13710 FUVEAU (FR)
(74) Mandataire: Marchand, André
(86) Numéro de dépôt international: PCT/FR2019/052030
(87) Numéro de publication internationale: WO 2020/049253

(56) Documents cités:
- WO-A1-2009/113286
- WO-A1-2016/124787
- US-A1- 2018 181 731

## Description

La présente invention concerne la lutte contre la contrefaçon d'accessoires ou de consommables, ou plus généralement d'organes périphériques amovibles, conçus pour fonctionner avec des appareils particuliers. Ainsi, l'invention s'applique notamment aux cartouches d'encre et toners pour imprimantes, aux recharges pour diffuseurs de parfums ou cigarettes électroniques, aux batteries d'alimentation électrique, aux casques ou écouteurs audio, etc.

Il existe un besoin de protéger la distribution de tels organes périphériques, notamment pour empêcher l'utilisation d'organes périphériques de qualité insuffisante qui pourraient notamment endommager les appareils avec lesquels ils sont utilisés.

Pour contrôler la commercialisation et/ou l'utilisation de tels organes périphériques amovibles, certains appareils comprennent un dispositif permettant d'authentifier l'organe. Par ailleurs, certains organes périphériques amovibles sont conçus pour mettre en œuvre une procédure d'authentification avec l'appareil pour lequel ils sont adaptés. L'authentification de l'organe périphérique par l'appareil repose sur une donnée d'authentification inscrite ou mémorisée par l'organe périphérique. L'accès à cette donnée d'authentification doit donc être protégé. Or, le niveau de protection d'une telle donnée d'authentification correspond généralement au coût du dispositif mémorisant la donnée d'authentification, étant entendu que plus le niveau de protection est élevé, plus son coût est élevé. WO 2009/113286 A1 constitue l'état de la technique pertinent.

La portée de l'invention est définie par les revendications indépendantes.

On a proposé plusieurs techniques d'authentification de tels organes périphériques pour répondre à ce besoin. Ces techniques consistent notamment en des méthodes de marquage spéciales des organes périphériques authentiques, pouvant faire intervenir des hologrammes.

On a également proposé d'associer à un organe périphérique un microcircuit sécurisé pour mémoriser une donnée d'authentification, pouvant se connecter à un processeur de l'appareil, et mettant en œuvre des fonctions cryptographiques. L'usage d'un tel microcircuit est supposé offrir la sécurité la plus grande, étant donné qu'il peut être très difficile à copier. Un tel microcircuit est utilisé pour mettre en œuvre une procédure d'authentification, généralement basée sur un protocole de type "challenge-réponse" qui implique que des données secrètes et des fonctions cryptographiques soient partagées entre le microcircuit et le processeur de l'appareil devant recevoir l'organe périphérique. Cette solution apparaît sécurisée si le microcircuit et le processeur intervenant dans la procédure d'authentification sont tous deux sécurisés. Cependant, le processeur de l'appareil n'est généralement pas sécurisé. Il en résulte que si le programme exécuté par ce processeur est compromis (modifié par une personne non autorisée), l'authentification réalisée n'est pas fiable.

Par exemple, la fourniture des encres dans une imprimante à jet d'encre classique, est gérée par le processeur de l'imprimante qui n'est généralement pas sécurisé. Le programme exécuté par ce processeur comprend des fonctions cryptographiques pour authentifier les cartouches d'encre (ou un autre organe périphérique), et des fonctions de commande, envoyant de simples commandes aux cartouches et recevant de ces dernières des données d'état. Il en résulte que le programme exécuté par le processeur de l'imprimante peut être modifié pour exécuter les fonctions de commande des cartouches, sans exécuter au préalable la procédure d'authentification de celles-ci ou sans tenir compte du résultat fourni par cette procédure authentification.

Il est donc souhaitable de renforcer la sécurité lors de l'utilisation d'un organe périphérique amovible par un appareil, en particulier pour empêcher l'appareil d'utiliser un organe périphérique non authentifié. Il peut être également souhaitable d'empêcher le remplissage d'un organe périphérique consommable.

Des modes de réalisation concernent un procédé de commande d'un organe périphérique amovible, comprenant des étapes consistant à : intercepter, par un microcircuit sécurisé interne de l'organe périphérique, une commande reçue par l'organe périphérique et destinée à être exécutée par un circuit à commander de l'organe périphérique, exécuter une procédure d'authentification mutuelle entre le microcircuit sécurisé et un processeur d'un appareil placé en communication avec l'organe périphérique, et si l'authentification mutuelle se termine avec succès : transformer, par le microcircuit, une commande reçue en une commande exécutable par le circuit à commander, transmettre, par le microcircuit au circuit à commander, la commande transformée, et exécuter la commande transformée par le circuit à commander.

Selon un mode de réalisation, le procédé comprend des étapes consistant à : recevoir, par le microcircuit, une commande à traiter préalablement chiffrée à l'aide d'une première clé de chiffrement, déchiffrer, par le microcircuit, la commande chiffrée, en utilisant une seconde clé de chiffrement, la commande chiffrée étant correctement déchiffrée si la seconde clé de chiffrement correspond à la première clé de chiffrement, et transmettre, par le microcircuit, la commande déchiffrée au circuit à commander de l'organe périphérique.

Selon un mode de réalisation, les commandes reçues par l'organe périphérique sont systématiquement déchiffrées par le microcircuit.

Selon un mode de réalisation, la première clé de chiffrement et la seconde clé de chiffrement sont une même clé d'un algorithme de chiffrement symétrique, ou la première clé de chiffrement est une clé privée du processeur et la seconde clé de chiffrement est une clé publique formant avec la clé privée une paire de clés d'un algorithme de chiffrement asymétrique, ou la première clé de chiffrement comprend une clé privée du processeur et une clé publique du microcircuit, et la seconde clé de chiffrement comprend une clé publique du processeur, formant avec la clé privée du processeur une paire de clés d'un algorithme de chiffrement asymétrique, et une clé privée du microcircuit formant avec la clé publique du microcircuit une paire de clés d'un algorithme de chiffrement asymétrique.

Selon un mode de réalisation, le procédé comprend des étapes consistant à : chiffrer, par le microcircuit, une donnée d'état du circuit à commander, en utilisant une troisième clé de chiffrement, transmettre la donnée d'état chiffrée au processeur, et recevoir et déchiffrer, par le processeur, la donnée d'état chiffrée, en utilisant une quatrième clé de chiffrement, la donnée d'état chiffrée étant correctement déchiffrée si la quatrième clé de chiffrement correspond à la troisième clé de chiffrement.

Selon un mode de réalisation, la troisième clé de chiffrement et la quatrième clé de chiffrement sont une même clé d'un algorithme de chiffrement symétrique, ou la troisième clé de chiffrement est une clé privée du microcircuit et la quatrième clé de chiffrement est une clé publique formant avec la clé privée une paire de clés d'un algorithme de chiffrement asymétrique, ou la troisième clé de chiffrement comprend une clé privée du microcircuit et une clé publique du processeur, et la quatrième clé de chiffrement comprend une clé publique du microcircuit, formant avec la clé privée du microcircuit une paire de clés d'un algorithme de chiffrement asymétrique, et une clé privée du processeur, formant avec la clé publique du processeur une paire de clés d'un algorithme de chiffrement asymétrique.

Selon un mode de réalisation, l'organe périphérique est un consommable, le procédé comprenant des étapes consistant à : déterminer, par le microcircuit, si une ressource fournie par l'organe périphérique, de type consommable, est épuisée, et si la ressource est déterminée épuisée, rejeter, par le microcircuit, une commande à traiter destinée au circuit à commander de l'organe périphérique, visant à utiliser la ressource.

Selon un mode de réalisation, le procédé comprend des étapes consistant à : transmettre, par le processeur au microcircuit, une fonction sous la forme de code exécutable à exécuter par le microcircuit, et exécuter, par le microcircuit, la fonction reçue.

Des modes de réalisation peuvent également concerner un organe périphérique amovible comprenant un circuit à commander susceptible de traiter des commandes reçues depuis l'extérieur de l'organe périphérique, et un microcircuit d'authentification de l'organe périphérique, intégré dans l'organe périphérique, l'organe périphérique étant configuré pour que des commandes destinées au circuit à commander soient interceptées par le microcircuit, le microcircuit étant configuré pour : exécuter une procédure d'authentification mutuelle avec un processeur d'un appareil, placé en communication avec le microcircuit, et si la procédure d'authentification mutuelle se termine avec succès, transformer une commande reçue par l'organe périphérique, en une commande exécutable par le circuit à commander, et transmettre la commande transformée au circuit à commander.

Selon un mode de réalisation, le microcircuit est configuré pour mettre en œuvre le procédé précédemment défini.

Selon un mode de réalisation, au moins une partie du circuit à commander est enveloppée dans un espace sécurisé, sous la surveillance du microcircuit, le microcircuit étant configuré pour rejeter une commande lorsqu'une atteinte à l'espace sécurisé est détectée.

Selon un mode de réalisation, le microcircuit et au moins une partie du circuit à commander sont associés ensemble au sein d'un composant intégré.

Selon un mode de réalisation, une fonction normalement exécutée par le processeur de l'appareil, est au moins partiellement déportée dans le microcircuit, le microcircuit étant alors configuré pour recevoir des commandes aptes à déclencher la fonction au moins partiellement déportée.

Des exemples de réalisation de l'invention seront décrits dans ce qui suit, à titre non limitatif en relation avec les figures jointes parmi lesquelles :
la figure 1 est une vue schématique d'une imprimante classique comportant une ou plusieurs cartouches d'encre amovibles,
la figure 2 est une vue schématique d'un processeur de commande d'un appareil associé à un organe périphérique amovible classique,
la figure 3 est une vue schématique d'un processeur de commande d'un appareil associé à un organe périphérique amovible classique, selon un mode de réalisation,
les figures 4 et 5 représentent schématiquement des étapes exécutées par le processeur de commande et le microcircuit de l'organe périphérique amovible, selon plusieurs modes de réalisation.

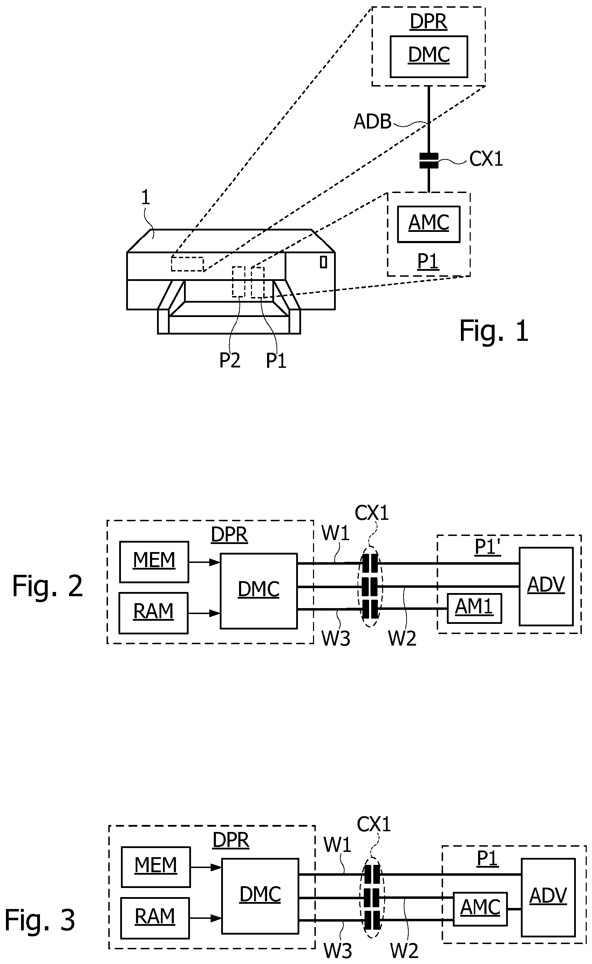

La figure 1 représente un appareil 1 comprenant un processeur de commande DPR, et un ou plusieurs organes périphériques amovibles P1, P2. L'appareil 1 peut être une imprimante, un diffuseur de parfum, un ordinateur personnel, un téléphone mobile, une cigarette électronique, etc. L'organe périphérique peut être une cartouche d'encre, une recharge de parfum ou de liquide à vaporiser, une batterie d'alimentation électrique, un câble de liaison avec un appareil externe, une mémoire externe, un casque audio, un clavier, etc.

Le processeur DPR comprend classiquement une unité de traitement DMC, par exemple de type microprocesseur ou microcontrôleur, qui gère les fonctions de l'appareil. L'unité DMC peut être connectée à une mémoire vive RAM et une mémoire non volatile MEM, par exemple de type EEPROM (Electrically Erasable Programmable Read-Only Memory) ou Flash. Pour authentifier un organe périphérique amovible P1, P2 , l'unité de traitement DMC est de préférence configurée pour coopérer avec un microcircuit AMC intégré dans chaque organe P1, P2 à authentifier. L'unité DMC peut être reliée à l'organe périphérique P1, P2, par l'intermédiaire d'un bus ADB et d'un connecteur CX. Le bus ADB peut être par exemple de type I2C, ou un bus spécifique. La liaison entre l'unité DMC et le microcircuit AMC peut alternativement être une liaison sans fil, telle qu'une liaison de type RFID ou radio.

La figure 2 représente le processeur DPR relié à un microcircuit AM1 d'un organe périphérique amovible P1', selon une architecture classique. Selon cette architecture, une partie W3 des liaisons du bus ADB est connectée au microcircuit AM1, et une autre partie W1, W2 des liaisons du bus ADB est connectée à un ou plusieurs autres circuits ADV de l'organe périphérique P1', par exemple des circuits électromécaniques permettant de produire des jets d'encre dans une cartouche d'encre pour imprimante. Une fois que le processeur DPR a authentifié le microcircuit AM1, il commande directement le circuit ADV de l'organe P1'. Il en résulte que le programme exécuté par le processeur DPR peut être facilement modifié pour supprimer la procédure d'authentification mutuelle avec le microcircuit AM1 ou faire exécuter des commandes par le circuit ADV même si l'exécution de la procédure d'authentification a échoué.

En pratique, l'unité de traitement DMC peut comprendre un microprocesseur connecté à un microcircuit rassemblant les données confidentielles et les fonctions cryptographiques. L'unité DMC peut se comporter en maître vis-à-vis du microcircuit AMC, AM1.

Le circuit ADV peut comprendre un circuit de commande d'une ou plusieurs vannes ou d'une pompe, dans un dispositif d'éjection d'encre d'une cartouche d'encre ou dans un dispositif de diffusion de liquide ou de gaz d'une recharge de parfum ou une recharge pour cigarette électronique. Dans le cas d'une batterie d'alimentation électrique, le circuit ADV peut comprendre un circuit de contrôle de recharge de la batterie et/ou un circuit d'alimentation électrique à partir des cellules de la batterie. Dans le cas d'une mémoire externe (carte SD - Secure Digital, clé USB - Universal Serial Bus), ce circuit peuvent comprendre un circuit d'horloge ou de génération de signaux de commande ou d'adressage de cellules mémoire de la mémoire. Dans le cas d'un câble (par exemple un câble USB) rassemblant plusieurs liaisons électriques, le circuit ADV peut comporter un ou plusieurs interrupteurs (par exemple un ou plusieurs transistors) interposés sur les liaisons électriques. Ainsi, le circuit ADV peut comporter un simple transistor ou un dispositif électromécanique commandé par un unique signal issu du microcircuit AMC.

La figure 3 représente le processeur DPR relié à un organe périphérique P1, selon un mode de réalisation. L'organe périphérique P1 diffère de l'organe périphérique P1' en ce qu'au moins une liaison W2 du bus ADB n'est pas connectée directement au circuit ADV de l'organe périphérique, mais par l'intermédiaire du microcircuit AMC intégré dans l'organe périphérique. Ainsi, pour pouvoir commander directement une partie du circuit ADV de l'organe P1, il est nécessaire de modifier le cheminement des liaisons électriques à l'intérieur de l'organe P1.

L'identification de l'organe P1 par l'unité DMC peut être effectuée à l'aide d'un identifiant mémorisé par le microcircuit AMC. L'authentification de l'organe périphérique est assurée par une fonction de cryptographie symétrique et une donnée d'authentification secrète commune, ou une fonction de cryptographie asymétrique et une paire de clés privée et publique certifiée par une autorité commune. Pour empêcher des accès non autorisés aux données secrètes, le microcircuit AMC comporte des éléments de sécurité dépendant des techniques employées pour assurer cette protection et de contraintes de coût.

La liaison entre l'unité DMC et le microprocesseur AMC peut être filaire ou non filaire. Dans ce dernier cas, l'appareil 1 et l'organe périphérique P1 comprennent chacun des circuits de transmission sans fil connectés respectivement à l'unité DMC et au microcircuit AMC.

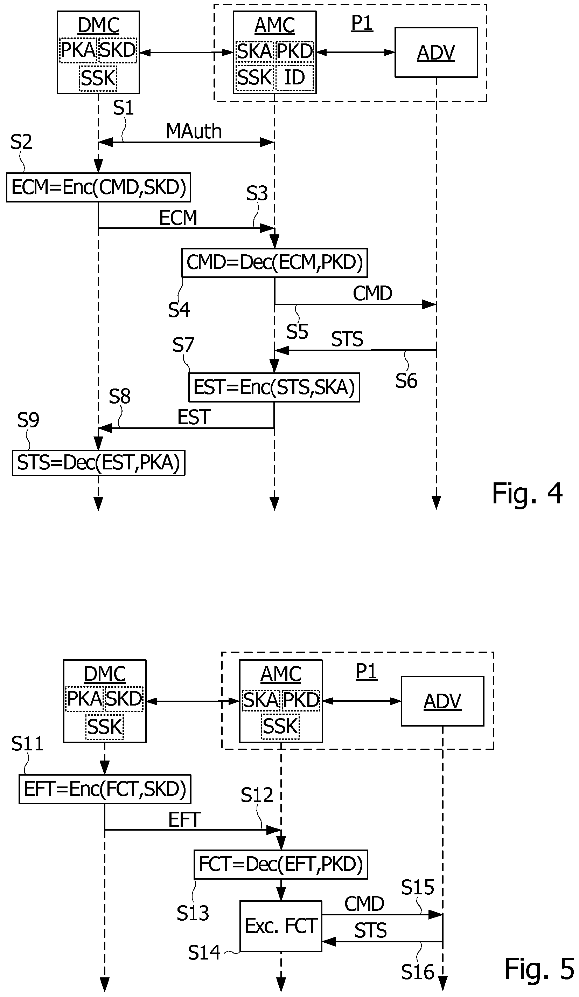

La figure 4 représente des étapes exécutées par l'unité de traitement DMC, et le microcircuit AMC d'un organe périphérique, par exemple P1. La figure 4 représente également le circuit ADV à commander de l'organe périphérique, qui est classiquement commandé directement par l'unité de traitement DMC. Durant une étape S1, l'unité de traitement DMC et le microcircuit AMC réalisent une procédure d'authentification mutuelle. L'étape S1 peut être déclenchée par la mise sous tension de l'appareil 1, et/ou à la suite de la connexion de l'organe périphérique P1 à l'unité de traitement DMC, par exemple. L'unité de traitement DMC envoie au microcircuit AMC de l'organe P1, une commande d'authentification et un challenge d'authentification (par exemple un nombre choisi aléatoirement). Dans le cas d'une infrastructure symétrique, le microcircuit AMC peut envoyer en réponse le challenge d'authentification chiffré à l'aide d'une clé secrète SK partagée avec l'unité de traitement DMC. La clé secrète SK peut être par exemple obtenue à l'aide d'une fonction cryptographique de dérivation de clé appliquée à un identifiant ID du microcircuit AMC et à une clé secrète maître, la fonction de dérivation et la donnée secrète maître étant connues de l'unité DMC et du microcircuit AMC. L'identifiant ID du microcircuit AMC peut être transmis par ce dernier avec le challenge chiffré.

Dans le cas d'une infrastructure asymétrique, le microcircuit AMC peut par exemple chiffrer le challenge reçu avec une clé privée SKA et envoyer le résultat chiffré obtenu à l'unité DMC, accompagné de la clé publique PKA associée à la clé privée SKA, éventuellement signée par un certificat émis par une autorité de confiance (par exemple le fabriquant de l'appareil 1 et/ou de l'organe périphérique). L'unité DMC vérifie le challenge chiffré reçu en le déchiffrant à l'aide de la clé publique PKA et en le comparant au challenge qu'elle a envoyé au microcircuit AMC. L'unité DMC peut également vérifier l'authenticité de la clé publique PKA à l'aide du certificat. Le microcircuit AMC est considéré authentique si le challenge déchiffré correspond au challenge transmis au microcircuit AMC. En cas d'échec de l'authentification du microcircuit AMC par l'unité DMC, l'unité DMC peut prendre toute mesure appropriée, telle que refuser de fonctionner, fonctionner d'une manière dégradée, et/ou avertir l'utilisateur.

Le microcircuit AMC demande également à authentifier l'unité DMC, soit d'une manière analogue, soit d'une autre manière. En cas d'échec de l'authentification de l'unité DMC, le microcircuit AMC peut refuser de fournir des informations qu'il contient, et/ou rejeter tout ou partie des commandes reçues, et/ou prendre toute autre mesure appropriée.

Selon un mode de réalisation, toutes les commandes reçues par l'organe périphérique P1 et destinées au circuit ADV sont interceptées par le microcircuit AMC. L'unité DMC ne peut donc pas commander directement le circuit ADV de l'organe périphérique P1, mais par l'intermédiaire du microcircuit AMC. A cet effet, l'unité DMC et le microcircuit AMC exécutent des étapes S2 à S5 pour transmettre une commande CMD au circuit ADV. A l'étape S2, l'unité DMC, chiffre la commande CMD à l'aide de la clé secrète SSK ou de la clé privée SKD du microcircuit AMC. A l'étape S3, la commande chiffrée ECM ainsi obtenue est transmise à l'organe périphérique P1. A l'étape S4, le microcircuit AMC reçoit et déchiffre la commande chiffrée ECM à l'aide de la clé secrète SSK ou de la clé publique PKD. A l'étape S5, la commande CMD ainsi déchiffrée est transmise par le microcircuit AMC au circuit ADV.

Ainsi, seul le microcircuit AMC peut faire exécuter la commande CMD par le circuit ADV. Sans la connaissance de la clé secrète SSK ou de la clé privée SKD, l'unité DMC ne peut pas chiffrer la commande CMD à transmettre au circuit ADV. Si la commande CMD est transmise à l'organe périphérique P1 sans être chiffrée, ou bien chiffrée à l'aide d'une autre clé, le microcircuit AMC va tenter de la déchiffrer avec la clé SSK ou PKD, ce qui produira une commande invalide pour le circuit ADV. Si la commande CMD est transmise, correctement chiffrée à l'organe périphérique P1, mais que le microcircuit AMC ne dispose pas de la clé secrète SSK ou de la clé publique PKD correspondant à la clé secrète SKD utilisée, le microcircuit AMC ne pourra pas déchiffrer la commande chiffrée ECM, et donc la faire exécuter par le circuit ADV.

Selon un mode de réalisation, les commandes transmises entre l'unité DMC et le microcircuit AMC sont également chiffrées à l'aide de la clé publique PKA du microcircuit AMC, afin que seul ce dernier puisse les déchiffrer, à l'aide de la clé privée SKA.

Selon un mode de réalisation, les données d'état de l'organe périphérique P1 ne sont pas transmises directement de ce dernier à l'unité DMC, mais par l'intermédiaire du microcircuit AMC. A cet effet, l'unité DMC et le microcircuit AMC exécutent des étapes S6 à S9 pour transmettre des données d'état STS de l'organe périphérique P1 à l'unité DMC. A l'étape S6, le microcircuit AMC reçoit des données d'état STS de l'organe périphérique P1, par exemple suite à la transmission d'une commande transmise à l'organe P1. A l'étape S7, le microcircuit AMC chiffre les données d'état STS à l'aide de la clé secrète SSK ou de la clé privée SKA du microcircuit AMC. A l'étape S8, les données chiffrées EST ainsi obtenues sont transmises à l'unité DMC. A l'étape S9, l'unité DMC reçoit et déchiffre les données chiffrées EST à l'aide de la clé secrète SSK ou de la clé publique PKA correspondant à la clé privée SKA.

Selon un mode de réalisation, les données d'état STS transmises entre le microcircuit AMC et l'unité DMC sont également chiffrées à l'aide de la clé publique PKD de l'unité DMC, afin que seule cette dernière puisse les déchiffrer à l'aide de la clé privée SKD.

Le microcircuit AMC peut être configuré pour contrôler l'utilisation de l'organe périphérique P1, à partir des commandes CMD exécutées et/ou des données d'état STS. Ainsi, dans le cas où l'organe P1 est un consommable, le microcircuit AMC peut contrôler l'épuisement de la ressource (encre, parfum, etc.) fournie par le consommable, et bloquer l'utilisation du consommable lorsque la ressource est censée être épuisée. De cette manière, il est possible d'empêcher le remplissage du consommable, en particulier avec un produit inadéquat.

Selon un mode de réalisation, tout ou partie des fonctions sensibles de commande du circuit ADV, normalement exécutées par l'unité DMC sont implémentées par le microcircuit AMC, l'unité DMC étant configurée pour envoyer au microcircuit des commandes permettant de déclencher ces fonctions. Ce déport de fonctions dans le microcircuit AMC conduit à modifier le jeu de commandes susceptibles d'être émises par l'unité DMC à l'organe périphérique P1. Il en résulte qu'un organe périphérique classique (sans le microcircuit AMC ou avec un microcircuit utilisé seulement pour l'authentification de l'organe périphérique) ne peut pas fonctionner avec l'unité DMC. Dans ce cas, il peut ne pas être nécessaire de chiffrer les commandes CMD émises par l'unité DMC à destination de l'organe périphérique P1.

Selon un mode de réalisation illustré par la figure 5, l'unité de traitement DMC est configurée pour transmettre à l'organe périphérique P1 le code exécutable d'une fonction FCT à exécuter par le microcircuit AMC après la réalisation de l'étape S1 d'authentification mutuelle avec succès. A cet effet, l'unité DMC et le microcircuit AMC exécutent des étapes S11 à S15. A l'étape S11, l'unité DMC chiffre le code exécutable de la fonction FCT à l'aide de la clé secrète SSK ou de la clé secrète SKD de l'unité DMC. A l'étape S12, l'unité DMC transmet le code exécutable chiffré EFT au microcircuit AMC. A l'étape S13, le microcircuit AMC reçoit et déchiffre le code exécutable chiffré EFT à l'aide de la clé SSK ou de la clé publique PKD correspondant à la clé SKD. Si le code exécutable de la fonction FCT a bien été transmis au microcircuit AMC, et si l'unité DMC et le microcircuit AMC ont utilisé des clés correspondantes pour chiffrer et déchiffrer ce code exécutable, le microcircuit peut réaliser la fonction FCT. A l'étape S14, le microcircuit AMC exécute le code exécutable ainsi transmis de la fonction FCT. L'exécution de la fonction FCT produit une ou plusieurs commandes CMD qui sont transmises au circuit ADV (étape S15). A l'étape S16, le circuit ADV peuvent transmettre en réponse un ou plusieurs message d'état STS qui sont transmis au microcircuit AMC. Ces messages d'état STS peuvent être retraités par le microcircuit et retransmis sous une autre forme à l'unité DMC. Les messages transmis à l'unité DMC peuvent également être chiffrés en exécutant par exemple les étapes S6 à S9.

De cette manière, pour contrôler un organe périphérique ne comportant pas le microcircuit AMC, il est nécessaire de modifier en profondeur le programme exécuté par l'unité DMC. De même le programme exécuté par l'unité DMC doit être adapté en profondeur aux caractéristiques décrites précédemment de l'organe périphérique P1.

L'unité DMC peut être sécurisée d'une manière analogue au microcircuit AMC, ou bien être associée à un microcircuit sécurisé assurant tout ou partie des opérations cryptographiques réalisées avec le microcircuit AMC, comme l'authentification mutuelle et les opérations de chiffrement et déchiffrement.

Selon un mode de réalisation, tout ou partie du circuit ADV peut être protégé dans un environnement sécurisé, par exemple par un maillage de fils conducteurs, relié au microcircuit AMC. Le microcircuit AMC est alors configuré pour détecter une atteinte physique à ce maillage, et prendre toute mesure appropriée contre une telle attaque, comme par exemple ne plus exécuter tout ou partie des commandes reçues.

Selon un mode de réalisation, le circuit ADV comprend un composant intégré de type MEMS (MicroElectroMechanical System) et le microcircuit AMC est intégré dans ce composant. Ainsi le microcircuit AMC et le composant forment une unité sécurisée qu'il est très difficile de modifier pour pouvoir par exemple commander directement le composant sans passer par le microcircuit AMC.

Il apparaîtra clairement à l'homme de l'art que la présente invention est susceptible de diverses variantes de réalisation et diverses applications. En particulier, l'invention n'est pas limitée au chiffrement des commandes émises par l'unité DMC. Il importe simplement que ces commandes diffèrent dans leur forme des commandes susceptibles d'être traitées par le circuit ADV de l'organe périphérique, le microcircuit AMC étant configuré pour transformer les commandes reçues en commandes exécutables par le circuit ADV. Comme précédemment mentionné, le transfert de fonctions normalement réalisées par l'unité DMC dans le microcircuit AMC nécessite de modifier le jeu de commandes susceptibles d'être transmises par l'unité DMC au microcircuit AMC. Ainsi, si l'organe périphérique associé à l'appareil 1 ne comporte pas le microcircuit AMC, il est nécessaire de modifier en profondeur le programme exécuté par l'unité DMC pour qu'il émette les commandes attendues par le circuit ADV. Si l'unité DMC est sécurisée ou associée à un élément sécurisé, il peut être prévu de sécuriser le programme chargé dans le processeur DPR, par exemple à l'aide d'une signature portant sur le programme exécutable, calculée à l'aide d'une clé de chiffrement du fabriquant de l'appareil, afin que le programme ne puisse pas être modifié par une personne non autorisée. Si l'élément sécurisé de l'appareil 1 n'authentifie pas le programme exécuté par l'unité DMC, l'élément sécurisé peut prendre toute mesure appropriée, comme bloquer l'utilisation de l'appareil.

Il n'est pas non plus nécessaire que toutes les commandes susceptibles d'être transmises à l'organe périphérique P1 soient transformées ou chiffrées, certaines de ces commandes pouvant être retransmises directement au circuit ADV par le microcircuit AMC, sans transformation préalable. Ainsi, les commandes transmises sans transformation au circuit ADV peuvent être par exemple des commandes accessoires non nécessaires à l'exécution d'une fonction principale de l'organe périphérique P1.

Par ailleurs, la commande CMD transmise au circuit ADV peut comprendre un ou plusieurs signaux numériques ou analogiques, adaptés à commander le circuit ADV.

## Revendications

1. Procédé de commande d'un organe périphérique amovible, comprenant des étapes consistant à :
intercepter, par un microcircuit sécurisé (AMC) interne de l'organe périphérique (P1), une commande reçue par l'organe périphérique et destinée à être exécutée par un circuit à commander (ADV) de l'organe périphérique, la commande étant chiffrée à l'aide d'une première clé de chiffrement (SSK, SKD),
exécuter une procédure d'authentification mutuelle entre le microcircuit sécurisé et un processeur (DMC) d'un appareil (1) placé en communication avec l'organe périphérique, et si l'authentification mutuelle se termine avec succès :
transformer, par le microcircuit, la commande reçue en une commande (CMD) exécutable par le circuit à commander, ladite transformation comprenant un
déchiffrement de la commande chiffrée en utilisant une seconde clé de chiffrement (SSK, PKD), la commande chiffrée étant correctement déchiffrée si la seconde clé de chiffrement correspond à la première clé de chiffrement,
transmettre, par le microcircuit au circuit à commander, la commande déchiffrée, et
exécuter la commande déchiffrée par le circuit à commander.

2. Procédé selon la revendication 1, dans lequel les commandes (ECM) reçues par l'organe périphérique (P1) sont systématiquement déchiffrées par le microcircuit (AMC).

3. Procédé selon la revendication 1 ou 2, dans lequel :
la première clé de chiffrement et la seconde clé de chiffrement sont une même clé (SSK) d'un algorithme de chiffrement symétrique, ou
la première clé de chiffrement est une clé privée (SKD) du processeur (DMC) et la seconde clé de chiffrement est une clé publique (PKD) formant avec la clé privée une paire de clés d'un algorithme de chiffrement asymétrique, ou
la première clé de chiffrement comprend une clé privée (SKD) du processeur (DMC) et une clé publique (PKA) du microcircuit (AMC), et la seconde clé de chiffrement comprend une clé publique (PKD) du processeur, formant avec la clé privée du processeur une paire de clés d'un algorithme de chiffrement asymétrique, et une clé privée (SKA) du microcircuit formant avec la clé publique du microcircuit une paire de clés d'un algorithme de chiffrement asymétrique.

4. Procédé selon l'une des revendications 1 à 3, comprenant des étapes consistant à :
chiffrer, par le microcircuit (AMC), une donnée d'état (STS) du circuit à commander (ADV), en utilisant une troisième clé de chiffrement (SSK, SKA),
transmettre la donnée d'état chiffrée (EST) au processeur (DMC), et
recevoir et déchiffrer, par le processeur, la donnée d'état chiffrée, en utilisant une quatrième clé de chiffrement (SSK, PKA), la donnée d'état chiffrée étant correctement déchiffrée si la quatrième clé de chiffrement correspond à la troisième clé de chiffrement.

5. Procédé selon la revendication 4, dans lequel :
la troisième clé de chiffrement et la quatrième clé de chiffrement sont une même clé (SSK) d'un algorithme de chiffrement symétrique, ou
la troisième clé de chiffrement est une clé privée (SKA) du microcircuit (AMC) et la quatrième clé de chiffrement est une clé publique (PKA) formant avec la clé privée une paire de clés d'un algorithme de chiffrement asymétrique, ou
la troisième clé de chiffrement comprend une clé privée (SKA) du microcircuit (AMC) et une clé publique (PKD) du processeur (DMC), et la quatrième clé de chiffrement comprend une clé publique (PKA) du microcircuit, formant avec la clé privée du microcircuit une paire de clés d'un algorithme de chiffrement asymétrique, et une clé privée (SKD) du processeur, formant avec la clé publique du processeur une paire de clés d'un algorithme de chiffrement asymétrique.

6. Procédé selon l'une des revendications 1 à 5, dans lequel l'organe périphérique (P1) est un consommable, le procédé comprenant des étapes consistant à :
déterminer, par le microcircuit (AMC), si une ressource fournie par l'organe périphérique, de type consommable, est épuisée, et
si la ressource est déterminée épuisée, rejeter, par le microcircuit, une commande à traiter (CMD) destinée au circuit à commander (ADV) de l'organe périphérique, visant à utiliser la ressource.

7. Procédé selon l'une des revendications 1 à 6, comprenant des étapes consistant à :
transmettre, par le processeur (DMC) au microcircuit (AMC), une fonction (FCT) sous la forme de code exécutable à exécuter par le microcircuit, et
exécuter, par le microcircuit, la fonction reçue.

8. Organe périphérique amovible comprenant un circuit à commander (ADV) susceptible de traiter des commandes (CMD) reçues depuis l'extérieur de l'organe périphérique, et un microcircuit (AMC) d'authentification de l'organe périphérique,
**caractérisé en ce que** le microcircuit est intégré dans l'organe périphérique et l'organe périphérique (P1) est configuré pour que toutes les commandes (CMD) destinées au circuit à commander (ADV) soient interceptées par le microcircuit (AMC), le microcircuit étant configuré pour :
exécuter une procédure d'authentification mutuelle avec un processeur (DMC) d'un appareil (1), placé en communication avec le microcircuit, et
si la procédure d'authentification mutuelle se termine avec succès, transformer une commande reçue (ECM) par l'organe périphérique sous une forme chiffrée, en une commande déchiffrée exécutable par le circuit à commander, et transmettre la commande déchiffrée au circuit à commander, le microcircuit (AMC) étant configuré pour mettre en œuvre le procédé selon l'une des revendications 1 à 7.

9. Organe périphérique selon la revendication 8, dans lequel au moins une partie du circuit à commander (ADV) est enveloppée dans un espace sécurisé, sous la surveillance du microcircuit (AMC), le microcircuit étant configuré pour rejeter une commande (ECM) lorsqu'une atteinte à l'espace sécurisé est détectée.

10. Organe périphérique selon l'une des revendications 8 et 9, dans lequel le microcircuit (AMC) et au moins une partie du circuit à commander (ADV) sont associés ensemble au sein d'un composant intégré.

11. Organe périphérique selon l'une des revendications 8 à 10, dans lequel une fonction normalement exécutée par le processeur (DMC) de l'appareil (1), est au moins partiellement déportée dans le microcircuit (AMC), le microcircuit étant alors configuré pour recevoir des commandes aptes à déclencher la fonction au moins partiellement déportée.

12. Organe périphérique selon l'une des revendications 8 à 11, dans lequel au moins une liaison (W2) d'un bus (ADB) de transmission de commandes entre une entrée de l'organe périphérique et le circuit à commander (ADV) transite par le microcircuit (AMC).

## Patentansprüche

1. Verfahren zum Steuern eines abnehmbaren Peripheriegeräts, umfassend die Schritte bestehend aus:
Abfangen, durch eine interne sichere Mikroschaltung (AMC) des Peripheriegeräts (P1), eines von dem Peripheriegerät empfangenen und zur Ausführung durch eine zu steuernde Schaltung (ADV) des Peripheriegeräts bestimmten Befehls, wobei der Befehl mittels eines ersten Verschlüsselungsschlüssels (SSK, SKD) verschlüsselt ist,
Ausführen eines Verfahrens für die gegenseitige Authentifizierung zwischen der sicheren Mikroschaltung und einem Prozessor (DMC) einer Einrichtung (1), die in Kommunikation mit dem Peripheriegerät gebracht ist, und falls die gegenseitige Authentifizierung erfolgreich abgeschlossen wird:
Umwandeln, durch die Mikroschaltung, des empfangenen Befehls in einen durch die zu steuernde Schaltung ausführbaren Befehl (CMD), wobei diese Umwandlung eine Entschlüsselung des verschlüsselten Befehls unter Verwendung eines zweiten Verschlüsselungsschlüssels (SSK, PKD) umfasst, wobei der verschlüsselte Befehl korrekt entschlüsselt wird, wenn der zweite Verschlüsselungsschlüssel dem ersten Verschlüsselungsschlüssel entspricht,
Übertragen, durch die Mikroschaltung an die zu steuernde Schaltung, des entschlüsselten Befehls, und
Ausführen des entschlüsselten Befehls durch die zu steuernde Schaltung.

2. Verfahren nach Anspruch 1, wobei die von dem Peripheriegerät (P1) empfangenen Befehle (ECM) systematisch durch die Mikroschaltung (AMC) entschlüsselt werden.

3. Verfahren nach Anspruch 1 oder 2, wobei:
der erste Verschlüsselungsschlüssel und der zweite Verschlüsselungsschlüssel ein gleicher Schlüssel (SSK) eines symmetrischen Verschlüsselungsalgorithmus sind, oder
der erste Verschlüsselungsschlüssel ein privater Schlüssel (SKD) des Prozessors (DMC) ist und der zweite Verschlüsselungsschlüssel ein öffentlicher Schlüssel (PKD) ist, der mit dem privaten Schlüssel ein Schlüsselpaar eines asymmetrischen Verschlüsselungsalgorithmus bildet, oder
der erste Verschlüsselungsschlüssel einen privaten Schlüssel (SKD) des Prozessors (DMC) und einen öffentlichen Schlüssel (PKA) der Mikroschaltung (AMC) umfasst, und der zweite Verschlüsselungsschlüssel einen öffentlichen Schlüssel (PKD) des Prozessors, der mit dem privaten Schlüssel des Prozessors ein Schlüsselpaar eines asymmetrischen Verschlüsselungsalgorithmus bildet, und einen privaten Schlüssel (SKA) der Mikroschaltung umfasst, der mit dem öffentlichen Schlüssel der Mikroschaltung ein Schlüsselpaar eines asymmetrischen Verschlüsselungsalgorithmus bildet.

4. Verfahren nach einem der Ansprüche 1 bis 3, umfassend die Schritte bestehend aus:
Verschlüsseln, durch die Mikroschaltung (AMC), eines Zustandsdatenelements (STS) der zu steuernden Schaltung (ADV) unter Verwendung eines dritten Verschlüsselungsschlüssels (SSK, SKA),
Übertragen des verschlüsselten Zustandsdatenelements (EST) an den Prozessor (DMC), und
Empfangen und Entschlüsseln, durch den Prozessor, des verschlüsselten Zustandsdatenelements unter Verwendung eines vierten Verschlüsselungsschlüssels (SSK, PKA), wobei das verschlüsselte Zustandsdatenelement korrekt entschlüsselt wird, wenn der vierte Verschlüsselungsschlüssel dem dritten Verschlüsselungsschlüssel entspricht.

5. Verfahren nach Anspruch 4, wobei:
der dritte Verschlüsselungsschlüssel und der vierte Verschlüsselungsschlüssel ein und derselbe Schlüssel (SSK) eines symmetrischen Verschlüsselungsalgorithmus sind, oder
der dritte Verschlüsselungsschlüssel ein privater Schlüssel (SKA) der Mikroschaltung ist (AMC), und der vierte Verschlüsselungsschlüssel ein öffentlicher Schlüssel (PKA) ist, der mit dem privaten Schlüssel ein Schlüsselpaar eines asymmetrischen Verschlüsselungsalgorithmus bildet, oder
der dritte Verschlüsselungsschlüssel einen privaten Schlüssel (SKA) der Mikroschaltung (AMC) und einen öffentlichen Schlüssel (PKD) des Prozessors (DMC) umfasst, und der vierte Verschlüsselungsschlüssel einen öffentlichen Schlüssel (PKA) der Mikroschaltung, der mit dem privaten Schlüssel der Mikroschaltung ein Schlüsselpaar eines asymmetrischen Verschlüsselungsalgorithmus bildet, und einen privaten Schlüssel (SKD) des Prozessors umfasst, der mit dem öffentlichen Schlüssel des Prozessors ein Schlüsselpaar eines asymmetrischen Verschlüsselungsalgorithmus bildet.

6. Verfahren nach einem der Ansprüche 1 bis 5, wobei das Peripheriegerät (P1) ein Verbrauchsmaterial ist, wobei das Verfahren die Schritte umfasst, bestehend aus:
Bestimmen, durch die Mikroschaltung (AMC), ob eine von dem Peripheriegerät bereitgestellte Ressource vom Typ Verbrauchsmaterial ausgeschöpft ist, und,
wenn die Ressource als ausgeschöpft bestimmt wird, Verwerfen, durch die Mikroschaltung, eines zu verarbeitenden Befehls (CMD), der für die zu steuernde Schaltung (ADV) des Peripheriegeräts bestimmt ist und darauf abzielt, die Ressource zu verwenden.

7. Verfahren nach einem der Ansprüche 1 bis 6, umfassend die Schritte bestehend aus:
Übertragen, durch den Prozessor (DMC) an die Mikroschaltung (AMC), einer Funktion (FCT) in Form von ausführbarem Code, der durch die Mikroschaltung auszuführen ist, und
Ausführen, durch die Mikroschaltung, der empfangenen Funktion.

8. Abnehmbares Peripheriegerät, umfassend eine zu steuernde Schaltung (ADV), die dazu geeignet ist, von außerhalb des Peripheriegeräts empfangene Befehle (CMD) zu verarbeiten, und eine Mikroschaltung (AMC) zur Authentifizierung des Peripheriegeräts,
**dadurch gekennzeichnet, dass** die Mikroschaltung in das Peripheriegerät integriert ist und das Peripheriegerät (P1) konfiguriert ist, um alle für die zu steuernde Schaltung (ADV) bestimmten Befehle (CMD) von der Mikroschaltung (AMC) abzufangen, wobei die Mikroschaltung konfiguriert ist zum:
Ausführen eines Vorgangs der gegenseitigen Authentifizierung mit einem Prozessor (DMC) einer Einrichtung (1), die in Kommunikation mit der Mikroschaltung gebracht ist, und,
wenn das Verfahren der gegenseitigen Authentifizierung erfolgreich abgeschlossen wird, Umwandeln eines von dem Peripheriegerät empfangenen Befehls (ECM) in verschlüsselter Form in einen entschlüsselten, von der zu steuernden Schaltung ausführbaren Befehl, und Übertragen des entschlüsselten Befehls an die zu steuernde Schaltung, wobei die Mikroschaltung (AMC) zum Durchführen des Verfahrens nach einem der Ansprüche 1 bis 7 konfiguriert ist.

9. Peripheriegerät nach Anspruch 8, wobei mindestens ein Teil der zu steuernden Schaltung (ADV) in einem sicheren Raum umhüllt ist, unter der Überwachung der Mikroschaltung (AMC), wobei die Mikroschaltung konfiguriert ist, um einen Befehl (ECM) zu verwerfen, wenn eine Beeinträchtigung des sicheren Raums erkannt wird.

10. Peripheriegerät nach einem der Ansprüche 8 und 9, wobei die Mikroschaltung (AMC) und mindestens ein Teil der zu steuernden Schaltung (ADV) zusammen innerhalb einer integrierten Komponente angeordnet sind.

11. Peripheriegerät nach einem der Ansprüche 8 bis 10, wobei eine normalerweise von dem Prozessor (DMC) der Einrichtung (1) ausgeführte Funktion zumindest teilweise in die Mikroschaltung (AMC) ausgelagert ist, wobei die Mikroschaltung dann konfiguriert ist, um Befehle zu empfangen, die geeignet sind, die zumindest teilweise ausgelagerte Funktion auszulösen.

12. Peripheriegerät nach einem der Ansprüche 8 bis 11, wobei mindestens eine Verbindung (W2) eines Busses (ADB) zur Übertragung von Befehlen zwischen einem Eingang des Peripheriegeräts und der zu steuernden Schaltung (ADV) durch die Mikroschaltung (AMC) verläuft.

## Claims

1. A method of controlling a removable peripheral device, comprising:
intercepting, by a secure microcircuit (AMC) internal to the peripheral device (P1), a command received by the peripheral device and intended to be executed by a circuit to be controlled (ADV) of the peripheral device, the command being encrypted using a first encryption key (SSK, SKD),
performing a mutual authentication procedure between the secure microcircuit and a processor (DMC) of a device (1) in communication with the peripheral device, and if the mutual authentication succeeds:
transforming, by the microcircuit, the received command into a command (CMD) executable by the circuit to be controlled, said transformation comprising a decryption of the encrypted command using a second encryption key (SSK, PKD), the encrypted command being correctly decrypted if the second encryption key corresponds to the first encryption key,
transmitting, by the microcircuit to the circuit to be controlled, the decrypted command, and
executing the decrypted command by the circuit to be controlled.

2. The method of claim 1, wherein commands (ECM) received by the peripheral device (P1) are systematically decrypted by the microcircuit (AMC).

3. The method of claim 1 or 2, wherein:
the first encryption key and the second encryption key are one and the same key (SSK) of a symmetric encryption algorithm, or
the first encryption key is a private key (SKD) of the processor (DMC) and the second encryption key is a public key (PKD) forming with the private key a key pair of an asymmetric encryption algorithm, or
the first encryption key comprises a private key (SKD) of the processor (DMC) and a public key (PKA) of the microcircuit (AMC), and the second encryption key comprises a public key (PKD) of the processor, forming with the private key of the processor a key pair of an asymmetric encryption algorithm, and a private key (SKA) of the microcircuit forming with the public key of the microcircuit a key pair of an asymmetric encryption algorithm.

4. The method of any of claims 1 to 3, further comprising:
encrypting, by the microcircuit (AMC), status data (STS) of the circuit to be controlled (ADV), using a third encryption key (SSK, SKA),
transmitting the encrypted status data (EST) to the processor (DMC), and
receiving and decrypting, by the processor, the encrypted status data, using a fourth encryption key (SSK, PKA), the encrypted status data being correctly decrypted if the fourth encryption key corresponds to the third encryption key.

5. The method of claim 4, wherein:
the third encryption key and the fourth encryption key are one and the same key (SSK) of a symmetric encryption algorithm, or
the third encryption key is a private key (SKA) of the microcircuit (AMC) and the fourth encryption key is a public key (PKA) forming with the private key a key pair of an asymmetric encryption algorithm, or
the third encryption key comprises a private key (SKA) of the microcircuit (AMC) and a public key (PKD) of the processor (DMC), and the fourth encryption key comprises a public key (PKA) of the microcircuit, forming with the private key of the microcircuit a key pair of an asymmetric encryption algorithm, and a private key (SKD) of the processor, forming with the public key of the processor a key pair of an asymmetric encryption algorithm.

6. The method of any of claims 1 to 5, wherein the peripheral device (P1) is a consumable, the method further comprising:
determining, by the microcircuit (AMC), whether a resource supplied by the peripheral device, of consumable type, is exhausted, and
if the resource is determined to be exhausted, rejecting, by the microcircuit, a command to be processed (CMD) intended for the circuit to be controlled (ADV) of the peripheral device, directed at using the resource.

7. The method of any of claims 1 to 6, further comprising:
transmitting, by the processor (DMC) to the microcircuit (AMC), a function (FCT) in the form of executable code to be executed by the microcircuit, and
executing, by the microcircuit, the received function.

8. A removable peripheral device comprising a circuit to be controlled (ADV) capable of processing commands (CMD) received from outside the peripheral device, and a microcircuit (AMC) for authenticating the peripheral device,
**characterized in that** the microcircuit is integrated in the peripheral device and the peripheral device (P1) is configured such that all commands (CMD) intended for the circuit to be controlled (ADV) are intercepted by the microcircuit (AMC), the microcircuit being configured to:
perform a mutual authentication procedure with a processor (DMC) of a device (1) in communication with the microcircuit, and
if the mutual authentication procedure succeeds, transform a command (ECM) received by the peripheral device in encrypted form into a decrypted command executable by the circuit to be controlled, and transmit the decrypted command to the circuit to be controlled, the microcircuit (AMC) being configured to implement the method of any of claims 1 to 7.

9. The peripheral device of claim 8, wherein at least a part of the circuit to be controlled (ADV) is enclosed in a secure environment, under the supervision of the microcircuit (AMC), the microcircuit being configured to reject a command (ECM) when a breach of the secure environment is detected.

10. The peripheral device of claim 8 or 9, wherein the microcircuit (AMC) and at least a part of the circuit to be controlled (ADV) are associated together within an integrated component.

11. The peripheral device of any of claims 8 to 10, wherein a function normally performed by the processor (DMC) of the device (1) is at least partially offloaded to the microcircuit (AMC), the microcircuit being configured to receive commands capable of triggering the at least partially offloaded function.

12. The peripheral device of any of claims 8 to 11, wherein at least one link (W2) of a command transmission bus (ADB) between an input of the peripheral device and the circuit to be controlled (ADV) passes through the microcircuit (AMC).
